# FASCICULE DE BREVET EUROPEEN

(11) **EP 3 715 925 B1**
(45) Date de publication et mention de la délivrance du brevet: **24.04.2024**
(21) Numéro de dépôt: 20163751.9
(22) Date de dépôt: 17.03.2020
(51) Int. Cl.: G02B 6/122, G02B 6/136, G02B 6/30, G02B 6/34, H01L 33/58, H01L 33/62, G02B 6/12, G02B 6/42

(54) **PUCE DE CIRCUIT INTÉGRÉ PHOTONIQUE**
CHIP FÜR PHOTONISCHEN INTEGRIERTEN SCHALTKREIS
PHOTONIC INTEGRATED CIRCUIT CHIP

(30) Priorité: 25.03.2019 FR 1903064
(43) Date de publication de la demande: 30.09.2020
(73) Titulaire: STMicroelectronics (Crolles 2) SAS, 38920 Crolles (FR); STMicroelectronics S.r.l., 20864 Agrate Brianza (MB) (IT)
(72) Inventeur: BOEUF, Frederic, 38420 LE VERSOUD (FR); MAGGI, Luca, 23852 GARLATE (IT)
(74) Mandataire: Cabinet Beaumont

(56) Documents cités:
- US-A1- 2015 097 257
- US-A1- 2017 160 482
- US-A1- 2018 188 459
- US-A1- 2019 004 247

## Description

### Domaine technique

La présente description concerne de façon générale les circuits intégrés photoniques (optiques et optoélectroniques), et plus particulièrement l'échange de signaux optiques avec ces circuits lors d'une étape de test ou lors du fonctionnement de ces circuits.

### Technique antérieure

Lors d'une étape de test ou lors du fonctionnement d'un circuit intégré photonique, des signaux optiques sont fournis à des entrées optiques du circuit, et, le cas échéant, des signaux optiques correspondants sont observés ou disponibles au niveau de sorties optiques du circuit. Des fibres optiques sont utilisées pour transmettre des signaux optiques aux entrées optiques du circuit, par exemple des signaux optiques fournis par une ou plusieurs sources de signaux optiques externes au circuit. Le cas échéant, des fibres optiques sont également utilisées pour transmettre les signaux optiques disponibles au niveau des sorties optiques du circuit à des dispositifs externes au circuit, par exemple à des dispositifs d'analyse de ces signaux optiques.

Les fibres optiques utilisées pour échanger des signaux optiques avec un circuit intégré photonique sont généralement organisées en un réseau de fibres ("fiber array"), les fibres du réseau étant maintenues en place les unes par rapport aux autres dans un bloc de maintien. Les fibres sont disposées dans le bloc de maintien de sorte qu'elles aient toute une première extrémité affleurant une même face du bloc de maintien. La répartition des premières extrémités correspond à la répartition d'une pluralité d'entrées et/ou de sorties optiques du circuit. Ainsi, lorsque les premières extrémités des fibres du réseau de fibres sont disposées en vis-à-vis de cette pluralité d'entrées et/ou de sorties optiques du circuit, plusieurs signaux optiques peuvent être échangés avec le circuit.

La publication de la demande de brevet US 2019/004247 A1 divulgue une puce de circuit intégré photonique de l'art antérieur.

### Résumé de l'invention

Il existe un besoin de pallier tout ou partie des inconvénients des circuits intégrés photoniques connus, notamment en ce qui concerne la façon de coupler optiquement des entrées et/ou des sorties optiques de ces circuits avec des fibres optiques d'un réseau de fibres disposées dans un bloc de maintien.

Il existe un besoin de pallier tout ou partie des inconvénients des procédés connus de fabrication de circuits intégrés photoniques, notamment en vue de coupler optiquement des entrées et/ou des sorties optiques de ces circuits avec des fibres optiques d'un réseau de fibres disposées dans un bloc de maintien.

Un mode de réalisation pallie tout ou partie des inconvénients des circuits intégrés photoniques connus, notamment en ce qui concerne la façon de coupler optiquement des entrées et/ou des sorties optiques de ces circuits avec des fibres optiques d'un réseau de fibres disposées dans un bloc de maintien.

Un mode de réalisation pallie tout ou partie des inconvénients des procédés connus de fabrication de circuits intégrés photoniques, notamment en vue de coupler optiquement des entrées et/ou sorties optiques de ces circuits avec des fibres optiques d'un réseau de fibres disposées dans un bloc de maintien.

Ainsi, un mode de réalisation prévoit une puce de circuit intégré photonique comprenant : une pluralité de coupleurs à réseau de diffraction verticale définis dans une première couche semiconductrice ou isolante surmontée d'une structure d'interconnexion comprenant plusieurs niveaux de métal noyés dans des deuxièmes couches isolantes ; et une cavité s'étendant en profondeur à travers les deuxièmes couches isolantes jusqu'à un niveau intermédiaire entre les coupleurs et le niveau de métal le plus proche des coupleurs, la cavité ayant des dimensions latérales telles que la cavité est adaptée à recevoir un bloc de maintien d'un réseau de fibres optiques destinées à être couplées optiquement avec les coupleurs, la cavité étant entièrement délimitée latéralement par la structure d'interconnexion.

Selon un mode de réalisation, les dimensions latérales de la cavité sont égales aux dimensions latérales du bloc majorées d'une marge de tolérance.

Selon un mode de réalisation, la marge de tolérance est comprise entre 10 µm et 200 pm, de préférence entre 50 µm et 150 pm, de préférence sensiblement égale à 100 µm.

Selon un mode de réalisation, la première couche est une couche semiconductrice, de préférence en silicium, de type semiconducteur sur isolant.

Selon un mode de réalisation, la première couche est une couche isolante en nitrure de silicium.

Selon un mode de réalisation, la première couche repose sur une troisième couche semiconductrice, de préférence en silicium, de type semiconducteur sur isolant.

Selon un mode de réalisation, le fond de la cavité est en vis-à-vis de la pluralité de coupleurs.

Selon un mode de réalisation, la puce comprend en outre, sur une face supérieure de la structure d'interconnexion, un anneau de garde entourant la cavité, l'anneau de garde étant configuré pour éviter un écoulement de colle au-delà de l'anneau lorsque ladite colle est disposée dans la cavité et que ledit bloc est inséré dans la cavité.

Selon un mode de réalisation, l'anneau de garde est constitué d'une pluralité de micro piliers métalliques régulièrement répartis sur le pourtour de l'anneau de garde.

Un autre mode de réalisation prévoit un assemblage comprenant une puce telle que définie ci-dessus et un bloc de maintien du réseau de fibres inséré dans ladite cavité.

Selon un mode de réalisation, l'assemblage comprend en outre de la colle, de préférence époxy, disposée dans la cavité, au moins entre le fond de la cavité et une face dudit bloc en vis-à-vis du fond de la cavité, ladite colle maintenant le bloc en place dans la cavité.

Un autre mode de réalisation, prévoit une tranche semiconductrice comprenant une pluralité de puces telles que définies ci-dessus, ou une pluralité d'assemblages tels que définis ci-dessus.

Un autre mode de réalisation prévoit un procédé mis en oeuvre à partir d'une tranche semiconductrice comprenant une pluralité de puces de circuit intégré photonique comportant chacune une pluralité de coupleurs à réseau de diffraction verticale définis dans une première couche semiconductrice ou une première couche isolante surmontée d'une structure d'interconnexion comprenant plusieurs niveaux de métal noyés dans des deuxièmes couches isolantes, le procédé comprenant l'étape consistant à graver, à partir d'une surface supérieure de la structure d'interconnexion, une cavité pénétrant dans les deuxièmes couches jusqu'à un niveau intermédiaire entre les coupleurs et le niveau de métal le plus proche des coupleurs, la cavité ayant des dimensions latérales telles que la cavité est adaptée à recevoir un bloc de maintien d'un réseau de fibres optiques destinées à être couplées optiquement avec les coupleurs, la cavité étant entièrement délimitée latéralement par la structure d'interconnexion.

Selon un mode de réalisation, le procédé comprend en outre une étape consistant à découper ladite tranche pour individualiser lesdites puces.

Selon un mode de réalisation, le procédé comprend, pour au moins une puce, les étapes suivantes : disposer de la colle, de préférence époxy, dans la cavité de la puce ; insérer et positionner le bloc dans la cavité de manière à coupler optiquement des extrémités desdites fibres avec lesdits coupleurs ; et faire durcir ladite colle, de préférence par polymérisation provoquée par une exposition à un rayonnement lumineux, de préférence ultra-violet.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, en coupe et de façon schématique, un mode de réalisation d'un circuit intégré photonique du type auquel s'appliquent, à titre d'exemple, les modes de réalisation décrits ;
la figure 2 représente, de façon schématique, deux vues A et B illustrant une étape d'un mode de réalisation d'un procédé ;
la figure 3 représente, de façon schématique, deux vues A et B illustrant une autre étape d'un mode de réalisation d'un procédé ;
la figure 4 représente, de façon schématique, une vue en coupe illustrant l'étape de la figure 2 selon une variante de réalisation ; et
la figure 5 représente, de façon schématique, deux vues A et B illustrant une variante de réalisation du procédé décrit en relation avec les figures 2 et 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la fabrication, le fonctionnement et le test (choix des signaux optiques et électriques d'entrée et interprétation des signaux de sortie correspondants) des circuits intégrés photoniques n'ont pas été détaillés, les modes de réalisation décrits étant compatibles avec les circuits intégrés photoniques usuels.

Sauf précision contraire, lorsque l'on fait référence à deux éléments (électriquement ou optiquement) connectés entre eux, cela signifie directement connectés sans éléments intermédiaires autres que des conducteurs électriques ou des guides d'onde optiques, et lorsque l'on fait référence à deux éléments (électriquement ou optiquement) reliés entre eux, cela signifie que ces deux éléments peuvent être connectés ou être électriquement ou optiquement reliés par l'intermédiaire d'un ou plusieurs autres éléments. En outre, sauf précision contraire, lorsque l'on fait référence à une fibre optique et une entrée ou une sortie optique optiquement couplées entre elles, cela signifie que cette fibre et cette entrée ou cette sortie optique sont disposés de sorte qu'un signal optique puisse être transmis entre la fibre et l'entrée ou la sortie optique, autrement que par couplage évanescent ou couplage en champs proche, la distance entre la fibre optique et l'entrée ou la sortie optique ainsi couplées pouvant alors être supérieure à une ou plusieurs fois la longueur d'onde du signal optique.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., sauf précision contraire, il est fait référence à l'orientation des figures.

Sauf précision contraire, les expressions "environ", "approximativement", "sensiblement", et "de l'ordre de" signifient à 10 % près, de préférence à 5 % près.

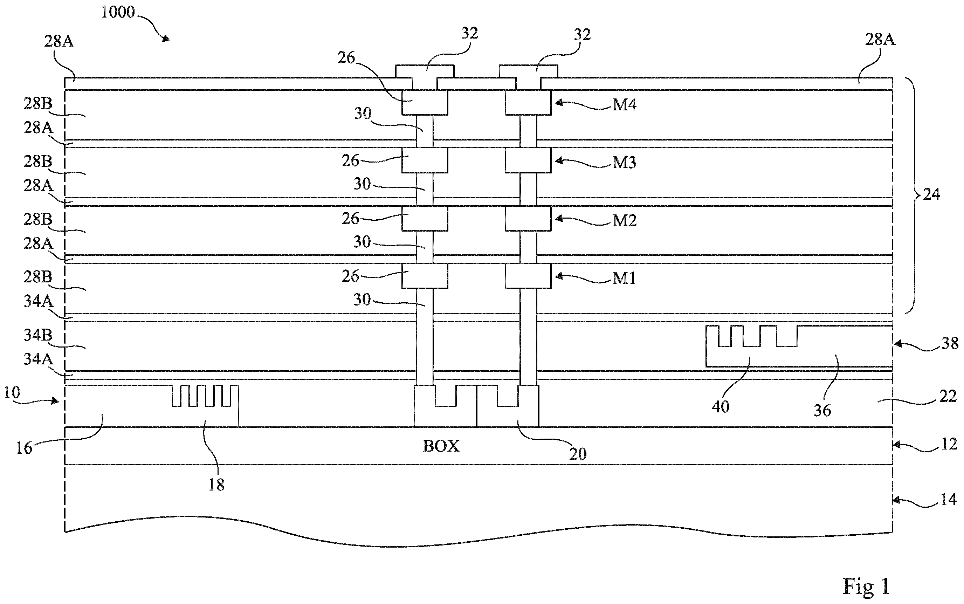

La figure 1 représente, en coupe et de façon schématique, un mode de réalisation d'une puce 1000 de circuit intégré photonique du type auquel s'appliquent, à titre d'exemple, les modes de réalisation décrits, étant entendu que les modes de réalisation qui vont être décrits ensuite ne se limitent pas à cet exemple particulier de puce ou de circuit photonique intégré.

La puce 1000 comprend une couche semiconductrice 10, de préférence en silicium, reposant sur une couche isolante 12 (BOX), de préférence en oxyde de silicium, elle-même reposant sur un support 14 tel qu'un substrat en silicium. La couche 10 est dite de type SOI (semiconducteur sur isolant - "Semiconductor On Insulator") .

Dans ce mode de réalisation, divers composants optiques et/ou optoélectroniques sont définis dans et/ou sur la couche 10. En particulier, des guides d'onde 16 sont définis dans la couche 10, un seul guide d'onde 16 étant visible en figure 1. Des entrées et/ou des sorties optiques 18 de la puce 1000, c'est-à-dire des entrées et/ou sorties optiques du ou des circuits intégrés photoniques qu'elle comprend, sont disposées à des extrémités des guides d'onde 16, une seule entrée optique 18 étant visible en figure 1. Dans les modes de réalisation décrits, on considère le cas où ces entrées et/ou ces sorties optiques sont des coupleurs à réseau de diffraction verticale (VGC - "Vertical Grating Coupler"). Ces coupleurs 18 sont, comme les guides d'onde 16, définis dans la couche 10. Dans l'exemple de la figure 1, un modulateur de phase 20 est également défini dans la couche 10.

La couche 10 est recouverte d'une couche isolante 22. La couche 22 est en contact avec la couche 10. Les couches 12 et 22 forment une gaine optique d'indice de réfraction plus faible que celui de la couche 10. Le niveau supérieur de la couche 22 est ici au-dessus du niveau supérieur de la couche 10, bien que, en variante, le niveau supérieur de la couche 22 peut être confondu avec le niveau supérieur de la couche 10.

Bien que cela ne soit pas illustré en figure 1, des composants électroniques, par exemple des transistors, peuvent être définis dans et/ou sur la couche 10.

Une structure d'interconnexion 24 surmonte la couche 22. La structure d'interconnexion 24 comprend des portions de couche métalliques 26 séparées par des couches isolantes, dans cet exemple 28A et 28B, et des vias métalliques 30. Les vias métalliques 30 traversent des couches isolantes 28A, 28B, et éventuellement une partie de l'épaisseur de la couche isolante 22 pour relier électriquement des portions de couches métalliques 26 entre elles et/ou à des composants de la puce 1000 définis dans et/ou sur la couche 10 et/ou à des plots de contact 32 disposés au niveau d'une face supérieure de la structure d'interconnexion 24. Des vias 30 et/ou des portions de couches métalliques 26 non reliés ou connectés électriquement à un plot 32 et/ou un composant de la puce 1000 peuvent être prévus dans la structure d'interconnexion 24.

On appelle niveau de métal, ou niveau de métallisation, l'ensemble des portions de couches métalliques 26 disposées à un même niveau dans la structure d'interconnexion 24. Dans l'exemple représenté, la puce comprend quatre niveaux de métal successifs M1, M2, M3 et M4, le niveau de métal M1 étant disposé du côté de la couche 10, ou, autrement dit, étant le niveau de métal le plus proche de la couche 10.

Dans l'exemple de la figure 1, chaque niveau de métal M1, M2, M3 et M4 est disposé dans une couche 28B, de préférence en oxyde de silicium, le niveau supérieur du niveau de métal affleurant la face supérieure de la couche 28B dans laquelle il est disposé. En outre, dans l'exemple de la figure 1, une couche 28A, de préférence en nitrure de silicium, repose sur et, de préférence en contact avec, la face supérieure de chaque ensemble d'un niveau de métal et de la couche 28B dans laquelle est disposé ce niveau de métal. Cette alternance de couche 28A et 28B résulte par exemple du procédé de fabrication mis en oeuvre pour réaliser la structure d'interconnexion 24. Les modes de réalisation décrits ne se limitent pas à cet exemple particulier de structure d'interconnexion 24.

Comme cela est représenté en figure 1, une ou plusieurs couches isolantes, dans cet exemple des couches isolantes 34A et 34B, peuvent être disposées, ou intercalées, entre l'ensemble des couches 10 et 22, et la structure d'interconnexion 24. Dans ce cas, des vias 30 de la structure d'interconnexion 24 peuvent traverser ces couches isolantes 34A, 34B pour relier électriquement des composants formés dans et/ou sur la couche 10 au reste de la structure d'interconnexion. Plus particulièrement, dans l'exemple de la figure 1, une couche 34B, par exemple d'oxyde de silicium, est intercalée entre la couche 10 et la structure d'interconnexion 24. De préférence, comme cela est représenté en figure 1, une couche 34A, de préférence en nitrure de silicium, repose sur et en contact avec la couche 34B, et la couche 34B repose sur et en contact avec une autre couche 34A, de préférence en nitrure de silicium.

Dans cet exemple de mode de réalisation, une couche 38 est disposée dans la couche 34B, la couche 38 étant de préférence en nitrure de silicium dans cet exemple où la couche 34B est en oxyde de silicium. La couche 34B recouvre donc la couche 38, et est surmontée de la structure d'interconnexion 24. Des guides d'onde 36 sont définis dans la couche 38, un seul guide d'onde 36 étant visible en figure 1. Comme pour les guides d'onde 16, des coupleurs à réseau de diffraction verticale 40 sont disposés à des extrémités des guides d'onde 36. Les coupleurs 40 sont, comme les guides d'onde 36, définis dans la couche 38. Les coupleurs 40 constituent des entrées et/ou des sorties optiques de la puce 1000.

Le fonctionnement d'un coupleur à réseau de diffraction verticale est basé sur des phénomènes de diffractions. Les coupleurs 18 et 40 de la puce 1000 sont configurés pour émettre (sortie optique) ou recevoir (entrée optique) un faisceau lumineux (signal optique) se propageant dans une direction sensiblement orthogonal aux plans des couches 10 et 38, les plans de couches 10 et 38 étant ici parallèles à la surface supérieure de la couche 12. A titre d'exemple, les coupleurs 18 et 40 sont configurés pour émettre ou recevoir un faisceau dans une direction formant un angle alpha avec la normale aux plans des couches 10 et 38, l'angle alpha étant par exemple compris entre 20 et 5 degrés, par exemple de l'ordre de 8 ou 13 degrés. A titre d'exemple, un coupleur à réseau de diffraction verticale occupe une surface d'environ 20 µm par environ 30 µm lorsque le faisceau lumineux reçu ou émis a un diamètre de l'ordre de 10 µm.

Bien que cela ne soit pas visible en figure 1, la puce 1000 comprend au moins un ensemble de plusieurs coupleurs 18 destinés à être optiquement couplés avec des premières extrémités respectives des fibres optiques d'un réseau de fibres disposées dans un bloc de maintien. De manière similaire, la puce 1000 comprend au moins un ensemble de plusieurs coupleurs 40 destinés à être optiquement couplés avec des premières extrémités respectives des fibres optiques d'un réseau de fibres disposées dans un bloc de maintien.

Les guides d'onde 16 et/ou 36 et les coupleurs 18 et/ou 40 sont de préférence configurés pour fonctionner à des longueurs d'onde dans le proche infra-rouge, c'est-à-dire des longueurs d'onde comprises entre 1 et 2 µm, de préférence égales à environ 1,3 µm ou environ 1,55 pm, par exemple à 1,3 µm ou 1,55 µm.

On a représenté ici un exemple de mode de réalisation où la puce 1000 comprend des coupleurs 18 en silicium et des coupleurs 40 en nitrure de silicium. Dans une variante de réalisation non illustrée, les coupleurs 18 peuvent être omis, la puce 1000 ne comprenant alors que les coupleurs 40. Dans cette variante, les guides d'onde 16 peuvent éventuellement être omis. A l'inverse, dans une autre variante de réalisation, les coupleurs 40 peuvent être omis, la puce 1000 ne comprenant alors que les coupleurs 18. Dans cette autre variante, les guides d'onde 36 peuvent éventuellement être omis.

Par ailleurs, la puce 1000 peut être une des puces d'une pluralité de puces 1000 identiques fabriquées à partir d'une même tranche semiconductrice, ou, autrement dit, une tranche semiconductrice peut comprendre plusieurs puces 1000 identiques. La puce 1000 peut également être une puce individualisée, c'est-à-dire l'une des puces 1000 obtenue après une étape de découpe d'une tranche semiconductrice comprenant plusieurs puces 1000 identiques.

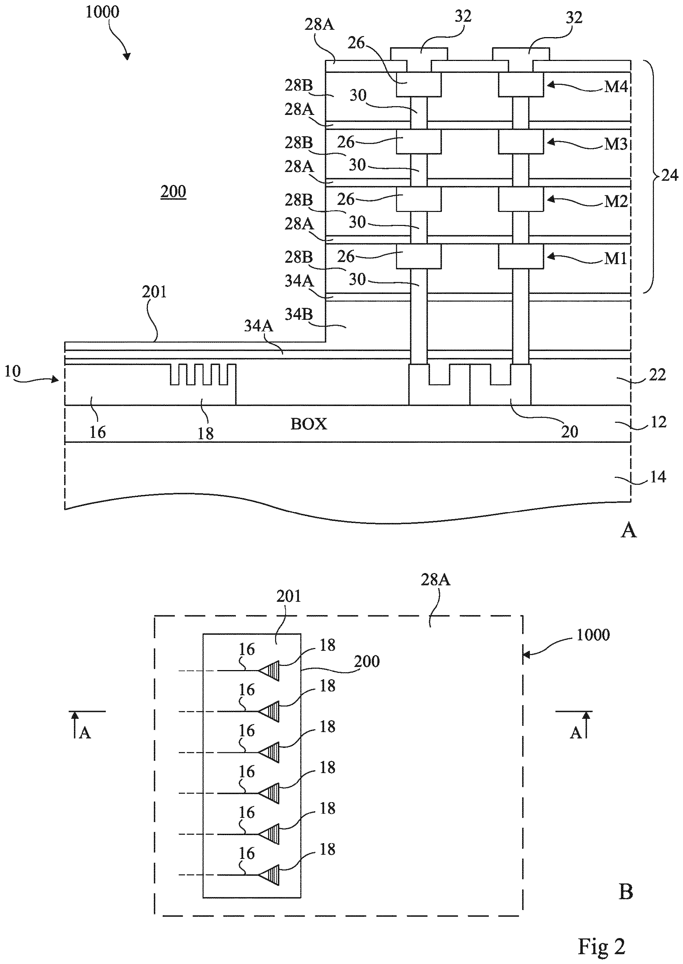

La figure 2 représente, de façon schématique, deux vues A et B illustrant une étape d'un mode de réalisation d'un procédé de fabrication d'une puce de circuit intégré photonique, les vues A et B étant des vues respectivement en coupe et de dessus d'une partie de la puce 1000 après la mise en oeuvre de cette étape. Plus particulièrement, la partie de la puce 1000 représentée en vue A correspond à une partie d'une vue en coupe selon le plan de coupe AA de la vue B.

Dans ce mode de réalisation, la puce 1000 comprend un ensemble de plusieurs coupleurs 18, dans cet exemple six coupleurs 18, destinés à être optiquement couplés à des premières extrémités respectives des fibres optiques d'un réseau de fibres maintenu en place dans un bloc de maintien.

A l'étape de la figure 2, la puce 1000 fait de préférence partie d'une tranche semiconductrice comprenant une pluralité de puces 1000 identiques, l'étape décrite ici étant réalisée simultanément pour l'ensemble des puces 1000 de la tranche.

A cette étape, une cavité 200 a été gravée à partir de la face supérieure de la structure d'interconnexion 24, c'est-à-dire à partir de la surface supérieure de la couche isolante 28A en haut de la structure 24 dans cet exemple. La cavité 200 est gravée à travers des couches isolantes 28A et 28B de la structure d'interconnexion 24. La gravure de la cavité 200 est arrêtée à un niveau intermédiaire entre le niveau inférieur du niveau de métal le plus proche des coupleurs 18, ici le niveau de métal M1, et le niveau supérieur de la couche 10 dans laquelle sont définis les coupleurs 18. Autrement dit, la gravure est effectuée de sorte que le fond 201 de la cavité 200 soit disposé à ce niveau intermédiaire. De préférence, ce niveau intermédiaire est au-dessus du niveau supérieur de la couche 22 recouvrant la couche 10. Dans l'exemple de la figure 2, la gravure est arrêtée dans la couche 34B.

On notera que, dans la vue B, les coupleurs 18 et des portions attenantes des guides d'onde 16 ont été représentés de manière visible, au fond de la cavité 200, bien que ces coupleurs 18 et ces portions de guides d'onde 16 soient revêtus d'au moins une couche isolante, dans cet exemple la couche 22, la couche inférieure 34A et une partie de l'épaisseur de la couche 34B. En outre, dans cette vue B, les plots 32 n'ont pas été représentés.

Par ailleurs, comme cela se voit sur la vue B de la Figure 2, la cavité 200 est entièrement entourée par la structure d'interconnexion 24. Dit autrement, la cavité 200 est complètement délimitée latéralement par la structure d'interconnexion 24.

Les dimensions latérales de la cavité 200 sont déterminées par les dimensions du bloc de maintien du réseau de fibres. Ainsi, la cavité 200 est adaptée à recevoir le bloc de maintien du réseau de fibres. En effet, ce bloc de maintien est destiné à être inséré, au moins en partie, dans la cavité 200, de manière que les premières extrémités du réseau de fibres optiques soient optiquement couplées aux coupleurs 18. Plus particulièrement, les dimensions latérales de la cavité 200 sont légèrement supérieures aux dimensions latérales correspondantes du bloc de maintien du réseau de fibres. De préférence, les dimensions latérales de la cavité sont égales aux dimensions latérales correspondantes du bloc de maintien, majorées d'une marge de tolérance. La marge de tolérance est par exemple comprise entre 10 µm et 200 pm, de préférence entre 50 µm et 150 pm, de préférence sensiblement égale à 100 µm. Cette marge de tolérance permet d'assurer que le bloc de maintien puisse être inséré dans la cavité nonobstant d'éventuelles dispersions de fabrication lors de la gravure. Cette marge de tolérance permet également que l'orientation du bloc de maintien dans la cavité puisse être modifiée afin d'aligner les premières extrémités des fibres du réseau et les coupleurs 18, cet alignement tenant compte d'un éventuel angle alpha entre la direction de propagation d'un faisceau lumineux entre la première extrémité d'une fibre du réseau et le coupleur 18 correspondant.

De plus, l'emplacement de la cavité 200 est déterminé par l'emplacement des coupleurs 18 avec lesquels les premières extrémités des fibres du réseau de fibres sont destinées à être optiquement couplées. Plus particulièrement, l'emplacement de la cavité 200 est déterminé de sorte que, lorsque le bloc de maintien des fibres du réseau de fibres est inséré dans la cavité, les premières extrémités des fibres du réseau de fibres sont optiquement couplées avec les coupleurs 18, en tenant compte d'un éventuel angle alpha. De préférence, une étape d'alignement fin des fibres et des coupleurs 18 est mise en oeuvre, au cours de laquelle l'orientation du bloc dans la cavité 200 et/ou la profondeur à laquelle le bloc est inséré dans la cavité 200 sont modifiées pour maximiser le couplage optique entre les premières extrémités des fibres du réseau de fibres et les coupleurs 18.

A titre d'exemple de dimensions, un bloc de maintien des fibres d'un réseau de fibres comprenant six fibres a une largeur de l'ordre de quelques millimètres, par exemple inférieure à 3 mm, par exemple de l'ordre de 2 mm, pour une longueur de quelques millimètres également, par exemple inférieure à 7 mm, par exemple de l'ordre de 5 mm.

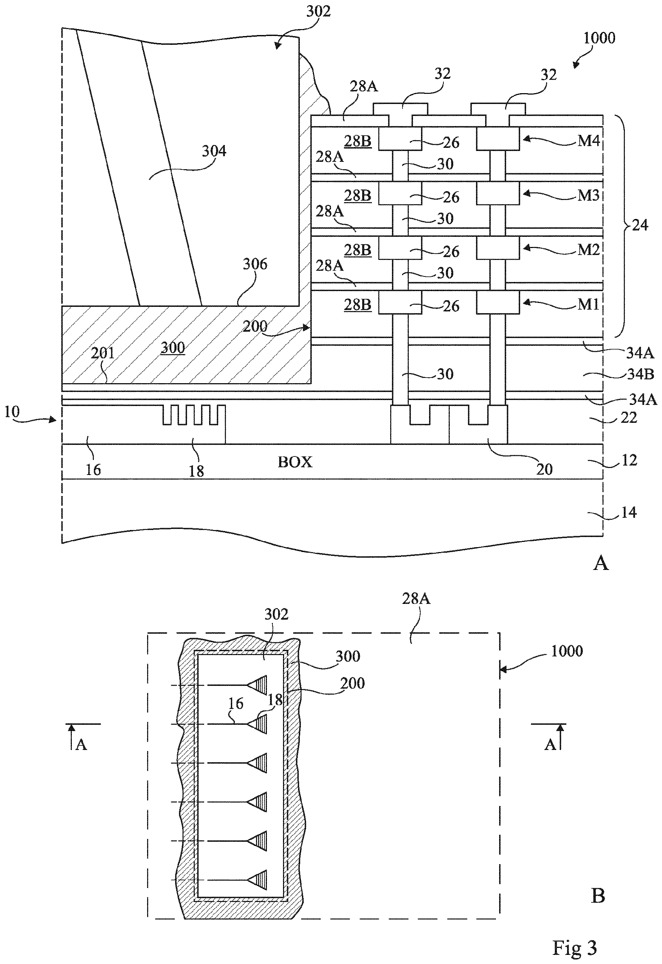

La figure 3 représente, de façon schématique, deux vues A et B illustrant une autre étape d'un mode de réalisation d'un procédé, les vues A et B de la figure 3 correspondant aux vues respectives A et B de la figure 2, après la mise en oeuvre de cette autre étape.

A cette étape, la puce 1000 est de préférence une puce individualisée, bien que cette étape puisse être mise en oeuvre alors que la puce 1000 fait encore partie d'une tranche semiconductrice comprenant une pluralité de puces 1000 identiques.

A cette étape, de la colle 300 a été disposée dans la cavité 200. A titre d'exemple, la colle 300 remplit la cavité 200 et affleure la face exposée de la structure d'interconnexion 24, la colle 300 pouvant également dépasser au-dessus du niveau de la face exposée de la structure d'interconnexion 24, par exemple d'environ 2 µm. La colle 300 est choisie pour qu'un signal optique transmis entre une fibre du réseau de fibres et un coupleur 18 puisse se propager dans la colle. Autrement dit, la colle 300 est transparente aux longueurs d'onde des signaux optiques considérés. A titre d'exemple, la colle 300 est une colle époxy, de préférence une colle époxy dont le durcissement résulte d'une polymérisation, par exemple provoquée en illuminant la colle 300 avec de la lumière ultra violette.

De plus, à cette étape, un bloc de maintien 302, par exemple en verre, dans lequel sont disposées les fibres 304 du réseau de fibres, a été inséré dans la cavité 200. En vue A, une seule fibre 304 est visible. En vue B, les fibres 304 n'ont pas été représentées, alors que les coupleurs 18 et des portions des guides d'onde 16 ont été représentés de manière visible malgré qu'ils soient surmontés de couches isolantes et du bloc 302.

Plus particulièrement, le bloc 302 est inséré de sorte que la face 306 du bloc 302 au niveau de laquelle affleurent les premières extrémités des fibres 304, c'est-à-dire la face inférieure du bloc 302 en vue A, soit en vis-à-vis du fond 201 de la cavité 200, donc des coupleurs 18.

Ainsi, de la colle 300 s'étend depuis la face 306 du bloc 302 jusqu'au fond 201 de la cavité 200. De préférence, la quantité de colle 300 disposée dans la cavité 200 est choisie pour que, lors de l'insertion du bloc 302 dans la cavité 200, de la colle 300 remonte le long des faces latérales du bloc 302 et comble au moins en partie l'espace disponible entre les faces latérales du bloc 302 et les parois latérales de la cavité 200. Cela permet d'augmenter la stabilité ou résistance mécanique de l'assemblage de la puce 1000 et du bloc 302 après que la colle 300 ait durci par rapport au cas ou de la colle 300 n'est présente qu'entre le fond 201 de la cavité 200 et la face 306 du bloc 302. Dans l'exemple représenté, la colle 300 comble entièrement cet espace disponible et déborde sur la face supérieure de la structure d'interconnexion 24.

L'orientation du bloc 302, et éventuellement la profondeur à laquelle le bloc 302 est inséré dans la cavité 200, sont déterminées pour optimiser, c'est-à-dire maximiser, le couplage optique entre les fibres 304 et les coupleurs 18. La mise en oeuvre d'une étape de maximisation du couplage optique entre les fibres d'un bloc de maintien d'un réseau de fibre et des coupleurs à réseau de diffraction verticale d'une puce de circuit intégré, ou étape d'alignement fin, est à la portée de l'homme de métier et ne sera pas détaillée ici. A titre d'exemple, cette étape peut être mise en oeuvre en fournissant un signal optique à un coupleur 18 au moyen d'une fibre 304, et en modifiant l'orientation du bloc 302, et éventuellement la profondeur à laquelle le bloc 302 est inséré dans la cavité 200, jusqu'à maximiser une grandeur de sortie de la puce, par exemple l'amplitude d'un signal électrique dépendant de la quantité de lumière reçue par le coupleur 18 ou encore la quantité de lumière fournie par un autre coupleur 18 couplé optiquement au coupleur 18 recevant la lumière.

Une fois le bloc 302 positionné dans la cavité 200, une étape de durcissement de la colle 300 est réalisée. Par exemple, la colle 300 est durcie en l'exposant à une source de lumière, de préférence de la lumière ultra-violette. Selon un autre exemple, la colle est durcie en la chauffant.

Plutôt que de prévoir la cavité 200 pour y insérer le bloc 302, on aurait pu penser coller le bloc 302 directement sur la surface supérieure de la structure d'interconnexion 24, éventuellement après avoir retiré, au moins à l'emplacement où le bloc 302 est collé, la dernière couche isolante de la structure d'interconnexion 24, ici 28A, qui constitue en pratique une couche de passivation.

Toutefois, les pertes de transmission entre la première extrémité d'une fibre 304 du bloc 302 et un coupleur correspondant 18 auraient été plus importantes que dans le cas illustré en figure 3 en raison du plus grand nombre de couches isolantes 28A et 28B qu'un signal optique aurait traversé entre la fibre 304 et le coupleur 18. Ces pertes de transmission auraient par exemple été comprises entre 0,1 et 1 dB.

En outre, la colle utilisée pour coller le bloc 302 sur la face supérieure de la structure d'interconnexion 24 se serait répandue sur cette face supérieure, plus loin que quand la colle 300 est initialement disposée dans la cavité 200 comme cela a été décrit en relation avec la figure 3. De plus, le dépôt de cette colle de manière localisée à l'emplacement où le bloc 302 aurait été collé serait plus difficile à mettre en oeuvre que dans le cas décrit en relation avec la figure 3. Ainsi, en prenant l'exemple de la puce 1000, cela aurait entraîné que les plots 32 auraient été disposés plus loin du bloc 302 dans le cas où le bloc 302 aurait été collé sur la surface supérieure de la structure d'interconnexion 24 que dans le cas où ce bloc est au moins en partie inséré dans la cavité 200. Autrement dit, la prévision de la cavité 200 permet d'augmenter la densité d'intégration de la puce 1000, en particulier en ce qui concerne des éléments de connexion électrique formés au niveau de la face supérieure de la structure d'interconnexion 24.

Par ailleurs, il aurait été difficile, voire impossible, de modifier la hauteur du bloc 302 par rapport aux coupleurs 18 pour maximiser le couplage optique entre les fibres 304 et les coupleurs 18, contrairement à ce qui a été décrit en relation avec la figure 3.

On aurait également pu penser prévoir une cavité au-dessus de chaque coupleur 18, ou autrement dit, une cavité par coupleur 18. Cela aurait pu permettre de réduire les pertes de transmission d'un signal optique entre une fibre 304 et un coupleur 18 correspondant.

Toutefois, chaque cavité aurait alors eu des dimensions latérales de l'ordre de celles du coupleur 18 au-dessus duquel elle est disposée, par exemple une largeur et une longueur (par exemple mesurées dans un plan parallèle au plan de la couche 10) de l'ordre de 50 µm chacune. Autrement dit, chaque cavité au-dessus d'un coupleur 18 correspondant aurait eu des dimensions latérales très inférieures, par exemple d'au moins un facteur 5, à celles de la cavité 200. Le remplissage de chacune de ces petites cavités avec de la colle pour combler l'espace disponible entre le fond de la cavité et la face 306 du bloc 302 serait alors plus difficile à mettre en oeuvre que dans le cas de la figure 3 où la colle 300 remplit l'espace entre le fond 201 de la cavité 200 et la face 306 du bloc 302.

Par ailleurs, du fait qu'une partie au moins du bloc 302 est insérée dans la cavité 200, la partie du bloc 302 en saillie par rapport à la surface supérieure de la structure d'interconnexion 24 est moins haute que si le bloc 302 avait été collé directement sur cette face supérieure. Cela réduit les risques d'arrachement du bloc 302 lors de la manipulation de l'assemblage de la puce 1000 et du bloc 302. Cette résistance mécanique de l'assemblage de la puce 1000 est encore plus grande quand de la colle 300 remplit tout ou partie de l'espace disponible entre les parois latérales de la cavité 200 et les faces latérales du bloc 302. Une telle résistance mécanique ne pourrait pas être obtenue dans le cas où le bloc 302 serait collé directement sur la face supérieure de la structure d'interconnexion 24, donc dans le cas où la colle ne serait disposée qu'entre la face 306 du bloc 302 et la face supérieure de la structure d'interconnexion 24, et éventuellement le long d'une partie inférieure des faces latérales du bloc 302.

Du fait que la cavité 200 est complètement délimitée latéralement par la structure d'interconnexion 24, lorsque le bloc 302 est au moins en partie inséré dans la cavité 200, le bloc 302 est mieux maintenu que si le bloc 302 avait été disposé sur un bord de la puce 1000, par exemple sur épaulement ménagé sur ce bord de la puce 1000. En effet, en disposant le bloc 302 sur le bord de la puce 1000, au moins certaines faces latérales du bloc 302 n'auraient pas été en regard d'une paroi de la cavité 200. En outre, disposer le bloc 302 sur un bord de la puce 1000 rendrait difficile, voire impossible, d'individualiser la puce 1000 après que le bloc 302 ait été assemblé avec la puce 1000.

On aurait également pu penser à utiliser un bloc de maintien des fibres d'un réseau de fibres tel que, une fois inséré dans la cavité 200, les premières extrémités des fibres du réseau affleurent une même face latérale du bloc de maintien, pour que ces premières extrémités soient directement accolées à des extrémités correspondantes de plusieurs guides d'onde 16 ("butt coupling"), les coupleurs 18 étant alors omis.

Dans ce cas, le fond de la cavité 200 aurait dû traverser la couche 10 où sont définis les guides d'ondes 16 ce qui aurait réduit la quantité ou surface de couche 10 disponible pour y former des composants.

En outre, un couplage en accolant une extrémité de fibre directement à une extrémité de guide d'onde 16 aurait été moins efficace qu'un couplage avec un coupleur 18. En effet, les dimensions d'un guide d'onde 16 étant bien plus faibles que celle du coeur d'une fibre 304, la quantité de lumière transmise de la fibre au guide d'onde aurait alors été moins importante qu'avec un coupleur 18 qui permet de collecter une plus grande quantité de lumière.

Par ailleurs, l'alignement d'une extrémité d'une fibre optique avec une extrémité d'un guide d'onde 16 dans le cas d'un couplage en accolant l'extrémité de la fibre directement à l'extrémité du guide d'onde 16 doit être réalisé avec une plus grande précision, par exemple de l'ordre de 0,1 pm, que la précision avec laquelle est réalisé l'alignement d'une extrémité d'une fibre 304 avec un coupleur 18, la précision d'alignement étant alors par exemple de l'ordre de 1 µm.

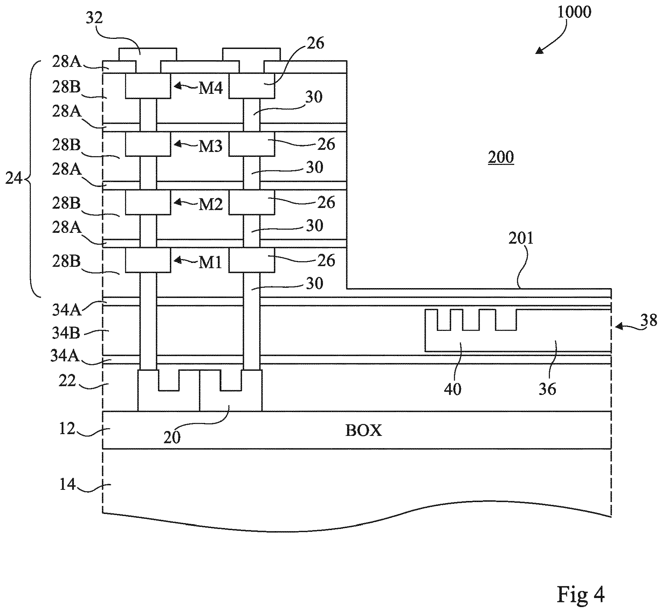

La figure 4 représente, de façon schématique, une vue en coupe illustrant l'étape de la figure 2 selon une variante de réalisation.

Dans cette variante de réalisation, la puce 1000 comprend un ensemble de plusieurs coupleurs 40, par exemple six coupleurs 40 dont un seul est visible en figure 3, destinés à être optiquement couplés à des premières extrémités respectives des fibres optiques 304 d'un réseau de fibres maintenu en place dans un bloc de maintien 302.

A l'étape de la figure 4, la puce 1000 fait de préférence partie d'une tranche semiconductrice comprenant une pluralité de puces 1000 identiques, l'étape décrite ici étant alors réalisée simultanément pour l'ensemble des puces 1000 de la tranche.

A cette étape, plutôt que de graver la cavité 200 à un emplacement déterminé par l'emplacement d'un ensemble de coupleurs 18, la cavité 200 est gravée à un emplacement déterminé par l'emplacement des coupleurs 40 avec lesquels seront couplés les premières extrémités respectives de fibres 304 du réseau de fibres maintenues dans le bloc 302.

De manière similaire à ce qui a été décrit en relation avec la figure 2, à l'étape illustrée par la figure 4, la gravure de la cavité est arrêtée à un niveau intermédiaire entre le niveau inférieur du niveau de métal le plus proche des coupleurs 40, ici le niveau de métal M1, et le niveau supérieur de la couche 36 dans laquelle sont définis les coupleurs 40. De préférence, ce niveau intermédiaire est au-dessus du niveau supérieur de la couche 34B recouvrant la couche 10. Dans l'exemple de la figure 4, la gravure est arrêtée dans la couche 28B dans laquelle est disposé le niveau de métal M1.

Les dimensions latérales de la cavité 200 et/ou l'emplacement de la cavité 200 sont déterminés de manière similaire à ce qui a été décrit en relation avec la figure 2, à la différence que les coupleurs considérés ici sont des coupleurs 40 plutôt que des coupleurs 18.

A une étape suivante non illustrée, de manière similaire à ce qui a été décrit en relation avec la figure 3, de la colle 300 est disposée dans la cavité 200 et le bloc 302 de maintien des fibres 304 du réseau est ensuite inséré dans la cavité 200. L'homme du métier est en mesure d'adapter ce qui a été décrit en relation avec la figure 3 pour les coupleurs 18 et les guides d'onde 16, au cas de la figure 4 pour les coupleurs 40 et les guides d'onde 36.

En outre, tous les avantages indiqués ci-dessus en relation avec les figures 2 et 3 se retrouvent dans cette variante de réalisation en considérant les coupleurs 40, les guides d'onde 36 et la couche 38 plutôt que respectivement les coupleurs 18, les guides d'onde 16 et la couche 10.

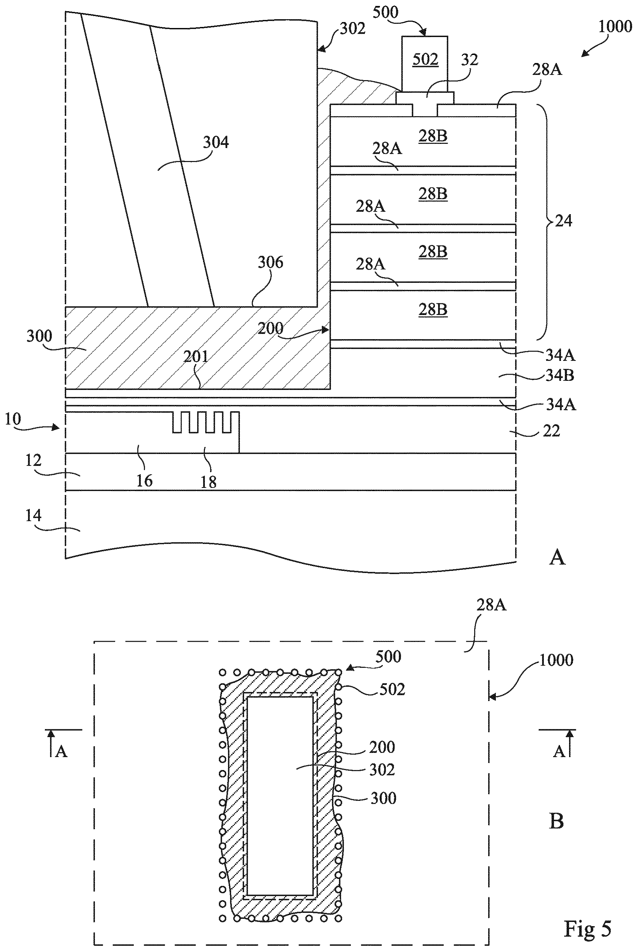

La figure 5 représente, de façon schématique, deux vues A et B illustrant une variante de réalisation du procédé décrit en relation avec les figures 2 et 3, les vues A et B de la figures 5 correspondant aux vues respectives A et B de la figure 3.

Dans cette variante de réalisation, on prévoit que la puce 1000 comprenne, sur la face supérieure de la structure d'interconnexion 24, un anneau de garde 500 entourant la cavité 200. L'anneau de garde fait saillie par rapport à la surface supérieure de la structure d'interconnexion 24. Comme cela est représenté en figure 5, l'anneau de garde est configuré pour réduire, voire empêcher, un écoulement de colle 300 au-delà de l'anneau de garde 500 quand le bloc 302 est inséré dans la cavité 200.

Dans cet exemple, l'anneau de garde 500 est constitué d'une pluralité de micro-piliers métalliques 502 repartis sur le pourtour de l'anneau de garde 500, les micro-piliers 502 s'étendant en hauteur selon une direction orthogonale à la face supérieure de la structure d'interconnexion 24. Autrement dit, les micro-piliers 502 sont disposés les uns à la suite des autres en suivant le contour d'un anneau. De préférence, un même pas, ou, autrement dit, une même distance, sépare deux micro-piliers 502 successifs. De préférence, ce pas est déterminé par la viscosité de la colle 300 utilisée, de sorte que l'écoulement de la colle 300 sur la surface supérieure de la structure d'interconnexion 24 soit réduit, voire empêché, lorsque de la colle 300 atteint l'anneau de garde 500.

Les micro-piliers 502 sont de préférence identiques à des micro-piliers (non représentés) de connexion électrique de la puce 1000 à une autre puce de circuit intégré, un interposeur ou un circuit imprimé. A titre d'exemple, chaque micro-pilier 502 repose sur et en contact avec un plot 32 disposé au niveau de la face supérieure de la structure d'interconnexion 24. De préférence, ce plot 32 n'est alors connecté électriquement à aucun composant de la puce 1000 par les vias 30 et les niveaux de métal M1, M2, M3 et M4 de la structure d'interconnexion 24.

A titre d'exemple de dimension, chaque micro-pilier 502 a une hauteur de l'ordre de 10 pm, par exemple de 10 pm, pour un diamètre de l'ordre de 20 pm, l'espace entre deux micro-piliers 502 voisins étant alors par exemple de l'ordre de 20 µm.

Par rapport au cas où l'on aurait collé directement le bloc 302 sur la surface supérieure de la structure d'interconnexion 24 et où un tel anneau de garde 500 aurait été prévu, cet anneau de garde aurait été plus grand que dans le cas de la figure 5, ou, autrement dit, aurait été disposé à une distance du bloc 302 plus grande que dans le cas de la figure 5. Cela permet donc de rapprocher des éléments de connexion électriques, par exemple d'autres micro-piliers, des billes métalliques, des plots 32, etc., du bloc 302 par rapport au cas où le bloc 302 aurait été collé directement sur la face supérieure de la structure d'interconnexion 24.

Cette variante de réalisation et ses avantages s'appliquent à la variante de réalisation décrite en relation avec la figure 4.

Dans les modes de réalisation et variantes décrits ci-dessus en relation avec les figures 1 à 5, aucun via 30 et aucune portion de couches métalliques 26 ne sont prévus à l'emplacement de la cavité 200, ou, autrement dit, au-dessus des coupleurs 18, respectivement 40. Toutefois, c'est déjà le cas dans des puces connues du type de celle représentée en figure 1 qui sont dépourvues de cavités 200 et pour lesquelles le bloc 302 est destiné à être collé directement sur la surface supérieure de la structure d'interconnexion 24. En effet, dans ces puces connues, la présence d'un via 30 ou d'une portion de couche métalliques 26 perturberait, voire empêcherait, la propagation d'un signal optique entre une fibre 304 et un coupleur 18 ou 40 correspondant. Ainsi, les modes de réalisation et variantes décrits en relation avec les figures 2, 3, 4 et 5 sont compatibles avec les puces photoniques connues.

En outre, bien que des avantages des modes de réalisation et variantes décrits ci-dessus aient été indiqués en rapport avec l'assemblage de la puce 1000 et du bloc 302 de maintien des fibres 304 du réseau de fibres, ces avantages sont intrinsèquement présents dans la puce 1000 munie de la cavité 200, ou, autrement dit, découlent de la prévision de la cavité 200 dans la puce 1000.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Puce (1000) de circuit intégré photonique comprenant :
une pluralité de coupleurs (18 ; 40) à réseau de diffraction verticale définis dans une première couche semiconductrice (10) ou isolante (38) surmontée d'une structure d'interconnexion (24) comprenant plusieurs niveaux de métal (M1, M2, M3, M4) noyés dans des deuxièmes couches isolantes (28A, 28B) ; et
une cavité (200) s'étendant en profondeur à travers les deuxièmes couches isolantes jusqu'à un niveau intermédiaire entre les coupleurs (18 ; 40) et le niveau de métal (M1) le plus proche des coupleurs (18 ; 40), la cavité (200) étant entièrement délimitée latéralement par la structure d'interconnexion (24), **caractérisée en ce que** la cavité a des dimensions latérales telles que la cavité (200) est adaptée à recevoir un bloc de maintien (302) d'un réseau de fibres optiques (304) destinées à être couplées optiquement avec les coupleurs (18 ; 40).

2. Puce selon la revendication 1, dans laquelle les dimensions latérales de la cavité (200) sont égales aux dimensions latérales du bloc (302) majorées d'une marge de tolérance.

3. Puce selon la revendication 2, dans laquelle la marge de tolérance est comprise entre 10 µm et 200 pm, de préférence entre 50 µm et 150 pm, de préférence sensiblement égale à 100 µm.

4. Puce selon l'une quelconque des revendications 1 à 3, dans laquelle la première couche (10) est une couche semiconductrice, de préférence en silicium, de type semiconducteur sur isolant.

5. Puce selon l'une quelconque des revendications 1 à 3, dans laquelle la première couche (38) est une couche isolante en nitrure de silicium.

6. Puce selon la revendication 5, dans laquelle la première couche (38) repose sur une troisième couche semiconductrice (10), de préférence en silicium, de type semiconducteur sur isolant.

7. Puce selon l'une quelconque des revendications 1 à 6, dans lequel le fond (201) de la cavité (200) est en vis-à-vis de la pluralité de coupleurs (18 ; 40).

8. Puce selon l'une quelconque des revendications 1 à 7, comprenant en outre, sur une face supérieure de la structure d'interconnexion (24), un anneau de garde (500) entourant la cavité (200), l'anneau de garde étant configuré pour éviter un écoulement de colle (300) au-delà de l'anneau lorsque ladite colle est disposée dans la cavité et que ledit bloc (302) est inséré dans la cavité.

9. Puce selon la revendication 8, dans laquelle l'anneau de garde (500) est constitué d'une pluralité de micro piliers métalliques (502) régulièrement répartis sur le pourtour de l'anneau de garde.

10. Assemblage comprenant :
une puce selon l'une quelconque des revendications 1 à 9 ; et
un bloc (302) de maintien du réseau de fibres optiques inséré dans ladite cavité.

11. Assemblage selon la revendication 10, comprenant en outre de la colle (300), de préférence époxy, disposée dans la cavité (200), au moins entre le fond (201) de la cavité et une face (306) dudit bloc (302) en vis-à-vis du fond (201) de la cavité (200), ladite colle maintenant le bloc en place dans la cavité.

12. Tranche semiconductrice comprenant une pluralité de puces (1000) selon l'une quelconque des revendications 1 à 9 ou une pluralité d'assemblages selon la revendication 10 ou 11.

13. Procédé mis en oeuvre à partir d'une tranche semiconductrice comprenant une pluralité de puces (1000) de circuit intégré photonique comportant chacune une pluralité de coupleurs (18 ; 40) à réseau de diffraction verticale définis dans une première couche semiconductrice (10) ou une première couche isolante (38) surmontée d'une structure d'interconnexion (24) comprenant plusieurs niveaux de métal (M1, M2, M3, M4) noyés dans des deuxièmes couches isolantes (28A, 28B), le procédé comprenant l'étape suivante :
graver, à partir d'une surface supérieure de la structure d'interconnexion (24), une cavité (200) pénétrant dans les deuxièmes couches (28A, 28B) jusqu'à un niveau intermédiaire entre les coupleurs (18 ; 40) et le niveau de métal (M1) le plus proche des coupleurs (18 ; 40), la cavité ayant des dimensions latérales telles que la cavité (200) est adaptée à recevoir un bloc de maintien (302) d'un réseau de fibres optiques (304) destinées à être couplées optiquement avec les coupleurs (18 ; 40) et la cavité (200) étant entièrement délimitée latéralement par la structure d'interconnexion (24).

14. Procédé selon la revendication 13, comprenant en outre une étape consistant à découper ladite tranche pour individualiser lesdites puces (1000).

15. Procédé selon la revendication 13 ou 14, comprenant pour au moins une puce (1000), les étapes suivantes :
disposer de la colle (300), de préférence époxy, dans la cavité (200) de la puce ;
insérer et positionner le bloc (302) dans la cavité de manière à coupler optiquement des extrémités desdites fibres (304) avec lesdits coupleurs (18 ; 40) ; et
faire durcir ladite colle (300), de préférence par polymérisation provoquée par une exposition à un rayonnement lumineux, de préférence ultra-violet.

## Patentansprüche

1. Photonischer integrierter Schaltungschip (1000) der folgendes aufweist:
eine Vielzahl von vertikalen Gitterkopplern (18; 40), die in einer ersten Halbleiter- (10) oder Isolierschicht (38) definiert sind, die mit einer Verbindungsstruktur (24) überlagert ist, die eine Vielzahl von Metallebenen (M1, M2, M3, M4) aufweist, die in zweite Isolierschichten (28A, 28B) eingebettet sind; und
einen Hohlraum (200), der sich in der Tiefe durch die zweiten Isolierschichten bis zu einer Zwischenebene zwischen den Kopplern (18; 40) und der Metallebene (M1), die den Kopplern (18; 40) am nächsten ist, erstreckt, wobei der Hohlraum (200) seitlich vollständig durch die Verbindungsstruktur (24) begrenzt ist, **dadurch gekennzeichnet, dass** der Hohlraum seitliche Abmessungen hat, so dass der Hohlraum (200) geeignet ist, einen Block (302) zum Halten eines Arrays von optischen Fasern (304) aufzunehmen, die dazu bestimmt sind, optisch mit den Kopplern (18; 40) gekoppelt zu werden.

2. Chip nach Anspruch 1, wobei die seitlichen Abmessungen des Hohlraums (200) gleich den seitlichen Abmessungen des Blocks (302) plus einer Toleranzspanne sind.

3. Chip nach Anspruch 2, wobei die Toleranzspanne im Bereich von 10 µm bis 200 µm, vorzugsweise von 50 µm bis 150 µm, vorzugsweise im Wesentlichen gleich 100 µm, liegt.

4. Chip nach einem der Ansprüche 1 bis 3, wobei die erste Schicht (10) eine Halbleiterschicht, vorzugsweise aus Silizium, vom Typ Halbleiter auf Isolator ist.

5. Chip nach einem der Ansprüche 1 bis 3, wobei die erste Schicht (38) eine Isolierschicht aus Siliziumnitrid ist.

6. Chip nach Anspruch 5, wobei die erste Schicht (38) auf einer dritten Halbleiterschicht (10), vorzugsweise aus Silizium, vom Typ Halbleiter auf Isolator aufliegt.

7. Chip nach einem der Ansprüche 1 bis 6, wobei der Boden (201) des Hohlraums (200) der Mehrzahl von Kopplern (18; 40) gegenüberliegt.

8. Chip nach einem der Ansprüche 1 bis 7, der ferner auf einer oberen Oberfläche der Verbindungsstruktur (24) einen Schutzring (500) aufweist, der den Hohlraum (200) umgibt, wobei der Schutzring konfiguriert ist, um einen Fluss von Klebstoff (300) über den Ring hinaus zu verhindern, wenn der Klebstoff in dem Hohlraum angeordnet ist und der Block (302) in den Hohlraum eingeführt wird.

9. Chip nach Anspruch 8, wobei der Schutzring (500) aus einer Vielzahl von metallischen Mikrosäulen (502) gebildet ist, die regelmäßig entlang des Umfangs des Schutzrings verteilt sind.

10. Eine Baugruppe, die folgendes aufweist:
den Chip nach einem der Ansprüche 1 bis 9; und
einen Block (302) zum Halten des in den Hohlraum eingeführten Arrays optischer Fasern.

11. Baugruppe nach Anspruch 10, die ferner einen Klebstoff (300), vorzugsweise Epoxid, aufweist, der in dem Hohlraum (200) zumindest zwischen dem Boden (201) des Hohlraums und einer dem Boden (201) des Hohlraums (200) gegenüberliegenden Oberfläche (306) des Blocks (302) angeordnet ist, wobei der Klebstoff den Block in dem Hohlraum an seinem Platz hält.

12. Halbleiterwafer, der eine Vielzahl von Chips (1000) nach einem der Ansprüche 1 bis 9 oder eine Vielzahl von Baugruppen nach Anspruch 10 oder 11 aufweist.

13. Ein Verfahren, das ausgehend von einem Halbleiterwafer implementiert wird, der eine Vielzahl von photonischen integrierten Schaltungschips (1000) aufweist, von denen jeder eine Vielzahl von vertikalen Gitterkopplern (18; 40) aufweist, die in einer ersten Halbleiterschicht (10) oder einer ersten Isolierschicht (38) definiert sind, die mit einer Verbindungsstruktur (24) überlagert ist, die eine Vielzahl von Metallebenen (M1, M2, M3, M4) aufweist, die in zweite Isolierschichten (28A, 28B) eingebettet sind, wobei das Verfahren den folgenden Schritt aufweist:
Ätzen, ausgehend von einer oberen Oberfläche der Verbindungsstruktur (24), eines Hohlraums (200), der in die zweiten Schichten (28A, 28B) bis zu einer Zwischenebene zwischen den Kopplern (18; 40) und der Metallebene (M1) eindringt, die den Kopplern (18; 40) am nächsten ist, wobei der Hohlraum seitliche Abmessungen hat, so dass der Hohlraum (200) geeignet ist, einen Block (302) zum Halten eines Arrays von optischen Fasern (304) aufzunehmen, die dazu bestimmt sind, optisch mit den Kopplern (18; 40) gekoppelt zu werden, und wobei der Hohlraum seitlich vollständig durch die Verbindungsstruktur (24) begrenzt ist.

14. Verfahren nach Anspruch 13, das ferner einen Schritt zum Sägen des Wafers aufweist, um die Chips (1000) zu vereinzeln.

15. Verfahren nach Anspruch 13 oder 14, das für mindestens einen Chip (1000) die folgenden Schritte aufweist:
Anordnen von Klebstoff (300), vorzugsweise Epoxid, in dem Chip-Hohlraum (200);
Einsetzen und Positionieren des Blocks (302) in den Hohlraum, um die Enden der Fasern (304) optisch mit den Kopplern (18; 40) zu koppeln; und
Aushärten des Klebstoffs (300), vorzugsweise durch Polymerisation, die durch Aussetzen einer Lichtstrahlung, vorzugsweise Ultraviolett, verursacht wird.

## Claims

1. A photonic integrated circuit chip (1000) comprising:
a plurality of vertical grating couplers (18; 40) defined in a first semiconductor (10) or insulating (38) layer topped with an interconnection structure (24) comprising a plurality of metal levels (M1, M2, M3, M4) embedded in second insulating layers (28A, 28B); and
a cavity (200) extending in depth through the second insulating layers all the way to an intermediate level between the couplers (18; 40) and the metal level (M1) closest to the couplers (18; 40), the cavity (200) being entirely delimited laterally by the interconnection structure (24), **characterized in that** the cavity has lateral dimensions such that the cavity (200) is adapted to receive a block (302) for holding an array of optical fibers (304) intended to be optically coupled to the couplers (18; 40).

2. The chip of claim 1, wherein the lateral dimensions of the cavity (200) are equal to the lateral dimensions of the block (302) plus a tolerance margin.

3. The chip of claim 2, wherein the tolerance margin is in the range from 10 µm to 200 pm, preferably from 50 µm to 150 pm, preferably substantially equal to 100 µm.

4. The chip of any of claims 1 to 3, wherein the first layer (10) is a semiconductor layer, preferably made of silicon, of semiconductor on insulator type.

5. The chip of any of claims 1 to 3, wherein the first layer (38) is an insulating layer made of silicon nitride.

6. The chip of claim 5, wherein the first layer (38) rests on a third semiconductor layer (10), preferably made of silicon, of semiconductor on insulator type.

7. The chip of any of claims 1 to 6, wherein the bottom (201) of the cavity (200) is opposite the plurality of couplers (18; 40).

8. The chip of any of claims 1 to 7, further comprising, on an upper surface of the interconnection structure (24), a guard ring (500) surrounding the cavity (200), the guard ring being configured to avoid a flow of glue (300) beyond the ring when said glue is arranged in the cavity and said block (302) is inserted into the cavity.

9. The chip of claim 8, wherein the guard ring (500) is formed of a plurality of metal micropillars (502) regularly distributed along the circumference of the guard ring.

10. An assembly comprising:
the chip of any of claims 1 to 9; and
a block (302) for holding the array of optical fibers inserted into said cavity.

11. The assembly of claim 10, further comprising glue (300), preferably epoxy, arranged in the cavity (200), at least between the bottom (201) of the cavity and a surface (306) of said block (302) opposite the bottom (201) of the cavity (200), said glue holding the block in place in the cavity.

12. A semiconductor wafer comprising a plurality of chips (1000) of any of claims 1 to 9 or a plurality of assemblies of claim 10 or 11.

13. A method implemented from a semiconductor wafer comprising a plurality of photonic integrated circuit chips (1000), each comprising a plurality of vertical grating couplers (18; 40) defined in a first semiconductor layer (10) or a first insulating layer (38) topped with an interconnection structure (24) comprising a plurality of metal levels (M1, M2, M3, M4) embedded in second insulating layers (28A, 28B), the method comprising the step of:
etching, from an upper surface of the interconnection structure (24), a cavity (200) penetrating into the second layers (28A, 28B) down to an intermediate level between the couplers (18; 40) and the metal level (M1) closest to the couplers (18; 40), the cavity having lateral dimensions such that the cavity (200) is adapted to receive a block (302) for holding an array of optical fibers (304) intended to be optically coupled to the couplers (18; 40), and the cavity being entirely delimited laterally by the interconnection structure (24).

14. The method of claim 13, further comprising a step of sawing said wafer to individualize said chips (1000).

15. The method of claim 13 or 14, comprising, for at least one chip (1000), the step of:
arranging glue (300), preferably epoxy, in the chip cavity (200) ;
inserting and positioning the block (302) in the cavity to optically couple ends of said fibers (304) to said couplers (18; 40); and
hardening said glue (300), preferably by polymerization caused by an exposure to a light radiation, preferably ultraviolet.
